# EUROPÄISCHE PATENTANMELDUNG

(11) **EP 4 814 343 A1**
(43) Veröffentlichungstag der Anmeldung: **30.09.2026**
(21) Anmeldenummer: 26161017.4
(22) Anmeldetag: 26.02.2026
(51) Int. Cl.: F16H 57/021, F16H 57/03, F16H 57/04

(54) **ZWISCHENGEHÄUSE MIT RADIALEN HEIZSTÄBEN**

(30) Priorität: 26.03.2025 DE 102025111744
(71) Anmelder: ZF Friedrichshafen AG, 88046 Friedrichshafen (DE)
(72) Erfinder: Hetmaniok, Simon, 58456 Witten (DE)
(74) Vertreter: ZF Friedrichshafen AG

(57) **Zusammenfassung**

Die Erfindung betrifft Getriebegehäuse (101) mit einer Außenwand (107), mindestens einem Lagersitz (109) und mindestens einer Stützstruktur (111), die sich zwischen der Außenwand (107) und dem mindestens einen Lagersitz (109) erstreckt; wobei die Stützstruktur (111) mindestens eine Versteifungsrippe (113) aufweist, die sich zwischen der Außenwand (107) und dem mindestens einen Lagersitz (109) erstreckt. Das Getriebegehäuse (101) weist mindestens eine Aussparung (201) auf, die in die Außenwand (201) mündet und in die mindestens eine Versteifungsrippe (113) hineinragt.

## Beschreibung

Die Erfindung betrifft ein Getriebegehäuse nach dem Oberbegriff von Anspruch 1.

Aus dem Stand der Technik sind Getriebegehäuse mit Heizpatronen bekannt. Die Heizpatronen dienen dazu, dass Getriebe vor dem Start zu erwärmen. Das erwärmte Öl hat eine geringere Viskosität, sodass sich die Verlustleistung verringert. Die Heizpatronen sind bei marktüblichen Getrieben in eine Außenwand eines Getriebegehäuses eingelassen.

Der Erfindung liegt die Aufgabe zugrunde, ein gegenüber dem Stand der Technik verbessertes Getriebegehäuse verfügbar zu machen.

Diese Aufgabe wird gelöst durch ein Getriebegehäuse nach Anspruch 1. Bevorzugte Weiterbildungen sind in den Unteransprüchen enthalten und ergeben sich aus nachfolgender Beschreibung. In den Figuren sind bevorzugte Ausführungsbeispiele dargestellt.

Das erfindungsgemäße Getriebegehäuse umfasst eine Außenwand, mindestens einen Lagersitz und mindestens eine Stützstruktur.

Die Außenwand kapselt das Innere des Getriebes gegenüber dessen Umgebung.

Ein Lagersitz bezeichnet ein Mittel zum Fixieren eines Lagers. Bevorzugt handelt es sich um ein Mittel zum Fixieren eines Lagers, mit dem ein Planetenträger drehbar in dem Getriebegehäuse gelagert ist. Der Lagersitz kann rotationssymmetrisch zu der Drehachse des Planetenträgers sein.

Die Stützstruktur dient dazu, den Lagersitz in der Außenwand zu fixieren. Über die Stützstruktur wird der Lagersitz mit der Außenwand verbunden. Sie erstreckt sich zwischen der Außenwand und dem mindestens einen Lagersitz. Bevorzugt ist die Stützstruktur rotationssymmetrisch zu einer Mittelachse Außenwand und/oder einer Drehachse des Planetenträgers.

Die Stützstruktur weist mindestens eine Versteifungsrippe auf. Dies ist ein Verdickter Bereich, der zur Versteifung der Stützstruktur dient.

Die mindestens eine Versteifungsrippe erstreckt sich zwischen der Außenwand und dem mindestens einen Lagersitz. Bezüglich der Mittelachse Außenwand und/oder der Drehachse des Planetenträgers kann die mindestens eine Versteifungsrippe beziehungsweise ihre Längsachse radial verlaufen.

Erfindungsgemäß mündet die mindestens eine Aussparung, die in die Außenwand. Eine Mündung der mindestens einen Aussparung befindet sich also in der Außenwand. Insbesondere kann sich die Mündung in einer äußeren Mantelfläche der Außenwand befinden.

Vorzugsweise ist die mindestens eine Aussparung als Sackloch ausgestaltet. Die ist ein Loch mit genau einer Mündung. Vorzugsweise handelt es sich um eine Sacklochbohrung.

Die mindestens eine Aussparung ragt in die mindestens eine Versteifungsrippe in die mindestens eine Versteifungsrippe hineinragt. Dies bedeutet, dass mindestens ein Teil der mindestens einen Aussparung innerhalb der mindestens einen Versteifungsrippe angeordnet ist.

Die mindestens eine Aussparung dient der Aufnahme eines Heizelements, etwa einer sogenannten Heizpatrone oder eines Heizstabs. Mittels des Heizelements lässt sich ein Getriebe zur Inbetriebnahme aufheizen.

Da die mindestens eine Versteifungsrippe sich zwischen der Außenwand und dem mindestens einen Lagersitz erstreckt, verläuft sie im Inneren des Getriebegehäuses. Entsprechend ragt das ein der mindestens einen Aussparung aufgenommenes Heizelement in das Innere des Getriebegehäuses hinein. Dies ermöglicht eine effektivere in effizientere Erwärmung des Getriebes. Das Getriebe wärmst sich schneller und unter Entstehung von weniger Verlustwärme auf.

Die mindestens eine Aussparung ist in einer bevorzugten Weiterbildung mindestens teilweise zylindrisch. Dies ermöglicht die Aufnahme eines zylindrischen Heizelements. Insbesondere kann die mindestens eine Aussparung mindestens teilweise kreiszylindrisch zur Aufnehme eines kreiszylindrischen Heizelements weitergebildet sein.

Bevorzugt ist das Getriebegehäuse derart weitergebildet, dass die mindestens eine Versteifungsrippe und die mindestens eine Aussparung koaxial zueinander ausgerichtet sind. Eine Längsachse der mindestens eine Versteifungsrippe und eine Längsachse der mindestens eine Aussparung stimmen dabei überein.

Das Getriebegehäuse ist vorzugsweise als Teil eines Getriebes, beispielsweise eines Windkraft- oder Seilbahngetriebes, weitergebildet.

Das Getriebe kann als Windkraftgetriebe oder Seilbahngetriebe ausgestaltet sein. Das Getriebe weist das oben beschriebene Heizelement auf. Dieses ist mindestens teilweise in der mindestens einen Aussparung angeordnet. Mindestens ein Teil des Heizelements befindet sich also in der mindestens einen Aussparung. Insbesondere kann das Heizelement die mindestens eine Aussparung vollständig ausfüllen.

In einer bevorzugten Weiterbildung ragt das Heizelement in die mindestens eine Versteifungsrippe hinein. Mindestens ein Teil des Heizelements befindet sich weiterbildungsgemäß also innerhalb der mindestens einen Versteifungsrippe. Dies ist von Vorteil, da sich das Heizelement infolgedessen mindestens teilweise im Inneren des Getriebegehäuses befindet.

Das Getriebe ist bevorzugt mit einer ersten Planetenstufe weitergebildet. Deren Planetenträger ist drehbar in dem mindestens einen Lagersitz gelagert.

Darüber hinaus ist das Getriebe bevorzugt mit einer zweiten Planetenstufe weitergebildet. Die Weiterbildung sieht vor, dass die erste und die zweite Planetenstufe triebwirksam miteinander verbunden sind. Insbesondere können die erste und die zweite Planetenstufe unmittelbar, das heißt ohne zwischengeschaltete weitere Getriebestufen triebwirksam miteinander verbunden sein.

Weiterbildungsgemäß ist die Stützstruktur axial zwischen der ersten Planetenstufe und der zweiten Planetenstufe angeordnet. Die Stützstruktur ragt also in einen Zwischenraum hinein, der sich axial zwischen der ersten Planetenstufe und der zweiten Planetenstufe erstreckt.

Die Weiterbildung ermöglicht es, das mindestens eine Heizelement in dem genannten Zwischenraum zwischen der ersten Planetenstufe und der zweiten Planetenstufe zu anzubringen. Dadurch lassen sich die erste Planetenstufe und die zweite Planetenstufe gezielt aufheizen.

Bevorzugte Ausführungsbeispiele der Erfindung sind in den Figuren dargestellt. Übereinstimmende Bezugsziffern kennzeichnen dabei gleiche oder funktionsgleiche Merkmale. Im Einzelnen zeigt:
- Fig. 1: ein Gehäuseteil;
- Fig. 2: das Gehäuseteil in Querschnittdarstellung.

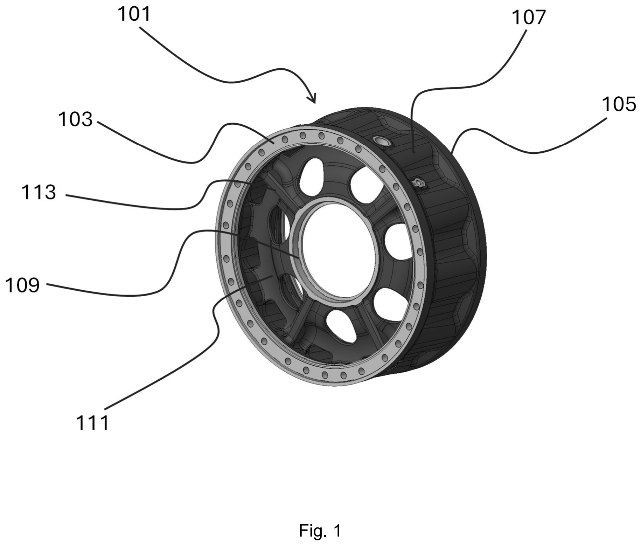

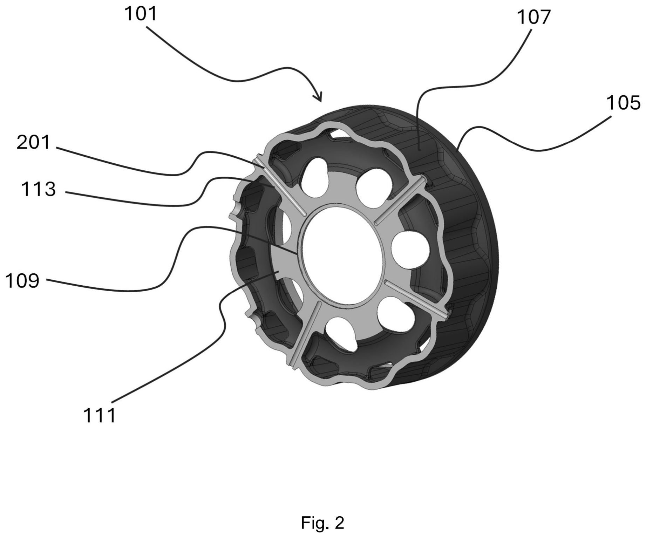

Der in den Fig. 1 und 2 dargestellte Gehäuseteil 101 weist einen ersten Schraubflansch 103 und einen zweiten Schraubflansch 105 auf. Die Schraubflansche 103, 105 dienen dazu, den Gehäuseteil 101 mit weiteren Gehäuseteilen zu verschrauben.

Zwischen den Schraubflanschen 103, 105 erstreckt sich ein Bereich 107 einer Außenwand des Gehäuses.

Der Gehäuseteil 101 bildet einen Lagersitz 109 für ein Lager eines Planetenträgers aus. Der Lagersitz 109 ist mittels einer Stützstruktur 111 in dem Bereich 107 fixiert.

Die Stützstruktur 111 erstreckt sich entsprechend zwischen dem Bereich 107 und dem Lagersitz 109.

Zur Stabilisierung weist die Stützstruktur 111 Versteifungsrippen 113 auf. Diese verlaufen in radialer Richtung und verbinden den Lagersitz 109 kraftleitend mit dem Bereich 107.

Die Querschnittdarstellung in Fig. 2 lässt Bohrungen 201 zur Aufnahme von Heizelementen erkennen, die sich ausgehend von einer in einer äußeren Mantelfläche des Bereichs 107 liegenden Mündung in jeweils eine Versteifungsrippe 113 erstrecken. Jede Versteifungsrippe 113 weist dabei eine Bohrung 201 auf. Die Bohrungen 201 sind als Sacklochbohren ausgestaltet.

### Bezugszeichen

- 101: Gehäuseteil
- 103: Schraubflansch
- 105: Schraubflansch
- 107: Bereich
- 109: Lagersitz
- 111: Stützstruktur
- 113: Versteifungsrippe
- 201: Bohrung

## Patentansprüche

1. Getriebegehäuse (101) mit einer Außenwand (107), mindestens einem Lagersitz (109) und mindestens einer Stützstruktur (111), die sich zwischen der Außenwand (107) und dem mindestens einen Lagersitz (109) erstreckt; wobei
die Stützstruktur (111) mindestens eine Versteifungsrippe (113) aufweist, die sich zwischen der Außenwand (107) und dem mindestens einen Lagersitz (109) erstreckt, **gekennzeichnet durch**
mindestens eine Aussparung (201) zur Aufnahme eines Heizelement, die in die Außenwand (201) mündet und in die mindestens eine Versteifungsrippe (113) hineinragt.

2. Getriebegehäuse (101) nach Anspruch 1; **dadurch gekennzeichnet, dass** die mindestens eine Aussparung (201) mindesten teilweise zylindrisch ist.

3. Getriebegehäuse (101) nach einem der vorhergehenden Ansprüche; **dadurch gekennzeichnet, dass**
die mindestens eine Versteifungsrippe (113) und die mindestens eine Aussparung (201) koaxial zueinander angeordnet sind.

4. Getriebe mit mindestens einem Heizelement; **gekennzeichnet durch** ein Getriebegehäuse (101) nach einem der vorhergehenden Ansprüche; wobei
das mindesten eine Heizelement mindestens teilweise in der mindestens einen Aussparung (201) angeordnet ist.

5. Getriebe nach dem vorhergehenden Anspruch; **dadurch gekennzeichnet, dass** das mindestens eine Heizelement () in die mindestens eine Versteifungsrippe (113) hineinragt.

6. Getriebe nach einem der Ansprüche 4 oder 5; **gekennzeichnet durch** eine erste Planetenstufe, deren Planetenträger drehbar in dem mindestens einen Lagersitz (109) gelagert ist.

7. Getriebe nach einem der Ansprüche 4 bis 6; **gekennzeichnet durch** eine zweite Planetenstufe; wobei
die erste Planetenstufe und die zweite Planetenstufe triebwirksam miteinander verbunden sind; und wobei
die Stützstruktur (111) axial zwischen der ersten Planetenstufe und der zweiten Planetenstufe angeordnet ist.
